# EUROPÄISCHE PATENTANMELDUNG

(11) **EP 2 168 528 A2**
(43) Veröffentlichungstag der Anmeldung: **31.03.2010**
(21) Anmeldenummer: 09011527.0
(22) Anmeldetag: 09.09.2009
(51) Int. Cl.: A61C 8/00

(54) **Dentalimplantat zur Implantation in einen menschlichen oder tierischen Kieferknochen und Verfahren zu seiner Herstellung**

(30) Priorität: 25.09.2008 DE 102008049014
(71) Anmelder: Bagambisa, Frank, 53173 Bonn (DE)
(72) Erfinder: Bagambisa, Frank, 53173 Bonn (DE)
(74) Vertreter: Walther, Walther & Hinz GbR

(57) **Zusammenfassung**

Gegenstand der Erfindung ist ein Dentalimplantat zur Implantation in einen menschlichen oder tierischen Kieferknochen mit einem Implantat (1) zur Aufnahme eines Zahnersatzes. Ein Dentalimplantat zu schaffen, welches mit weniger Unannehmlichkeiten für den Patienten implantiert werden kann, wird dadurch erreicht, dass das Implantat (1) mit Knochensubstanz (4) des Patienten zumindest teilweise umgeben ist, wobei die Knochensubstanz (4) nicht von der Stelle des Kiefers (6) des Patienten stammt, an der das Dentalimplantat (5) implantiert werden soll.

## Beschreibung

Die vorliegende Erfindung betrifft ein Dentalimplantat zur Implantation in einen menschlichen oder tierischen Kieferknochen gemäß dem Oberbegriff des Anspruches 1 und ein Verfahren zu seiner Herstellung gemäß dem Oberbegriff des Anspruches 5.

Als Ersatz für fehlende Zähne gehört es zum Stand der Technik, künstliche Dentalimplantate aus Titan, Keramik oder einem anderen Material in den Kieferknochen zu implantieren. Voraussetzung hierfür ist aber, dass an der Implantatstelle im Kieferknochen genügend gesunde Knochensubstanz vorhanden ist, damit das zu implantierende Dentalimplantat ausreichend Halt findet. Ist nicht genügend gesunde Knochensubstanz vorhanden, so kann an der lmplantatstelle Knochensubstanz aufgebaut werden, indem Knochen an anderer Stelle des Patienten entnommen und an der Implantatstelle eingesetzt wird. Dieser Vorgang ist aber sehr zeitintensiv, da die transplantierte Knochensubstanz erst im Kieferknochen einwachsen muss, bevor das Dentalimplantat implantiert werden kann. Während dieser Zeit kann der Patient diesen Bereich der Zähne nicht benutzen. Nachdem die transplantierte Knochensubstanz angewachsen ist, muss sich der Patient einem weiteren Eingriff unterziehen, in dem das eigentliche Dentalimplantat implantiert wird.

Davon ausgehend liegt der vorliegenden Erfindung die Aufgabe zu Grunde, ein Dentalimplantat der eingangs genannten Art zu schaffen, welches mit weniger Unannehmlichkeiten für den Patienten implantiert werden kann.

Als technische Lösung dieser Aufgabe wird erfindungsgemäß ein Dentalimplantat mit den Merkmalen des Anspruches 1 und ein Verfahren zu seiner Herstellung mit den Merkmalen des Anspruches 5 vorgeschlagen. Vorteilhafte Weiterbildungen dieses Dentalimplantates und dieses Verfahrens sind den jeweiligen Unteransprüchen zu entnehmen.

Ein nach dieser technischen Lehre ausgebildetes Dentalimplantat und ein nach dieser technischen Lehre ausgeführtes Verfahren haben den Vorteil, dass gleichzeitig mit dem eigentlichen Implantat auch die für den Knochenaufbau notwendige Knochensubstanz implantiert wird, wobei die Knochensubstanz vorzugsweise in einem Stück aus einem anderen Knochen des Patienten entnommen wird. Hierdurch entfällt der mühsame und zeitintensive Knochenaufbau, so dass der Patient sehr viel schneller wieder kauen kann. Insbesondere, wenn das Dentalimplantat unmittelbar nach der Implantation in einen Knochen des Patienten wieder explantiert und anschließend in den Kiefer implantiert wird, kann die gesamte Implantation in einem einzigen Eingriff erfolgen. Hierdurch wird dem Patient ein zweiter Eingriff, nämlich der zum Aufbau der Knochensubstanz, erspart.

Es hat sich als vorteilhaft erwiesen, um das Dentalimplantat herum Knochensubstanz mit einer Wandstärke von 0,5 mm bis 4 mm vorzusehen, wobei in vielen Fällen Knochensubstanz mit einer Wandstärke von 1 mm bis 2 mm ausreichend ist. Dies hat den Vorteil, dass um das Dentalimplantat herum genügend Knochensubstanz an der kritischen Stelle im Kiefer des Patienten implantiert wird, so dass das Dentalimplantat nach Anwachsen des Knochens ausreichend Halt findet.

Weitere Vorteile des erfindungsgemäßen Dentalimplantates und des erfindungsgemäßen Verfahrens ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: ein herkömmliches Implantat in einem beliebigen Knochen des Patienten;
- Fig. 2: eine Explosionsdarstellung eines Trepanbohrers und des Implantates gemäß Fig. 1, kurz vor der Explantation des Dentalimplantates;
- Fig. 3: eine Explosionsdarstellung des Trepanbohrers und des Implantates gemäß Fig. 2, nachdem der Trepanbohrer das Dentalimplantat ausgebohrt hat;
- Fig. 4: eine Explosionsdarstellung des erfindungsgemäßen Dentalimplantates und des Knochens gemäß Fig. 3;
- Fig. 5: eine Explosionsdarstellung des erfindungsgemäßen Dentalimplantates kurz vor der Implantation in die gewünschte Stelle des Kieferknochens des Patienten.

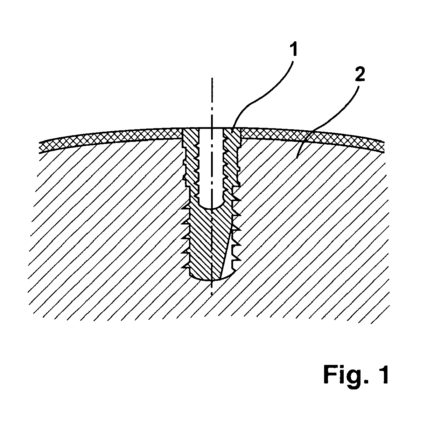

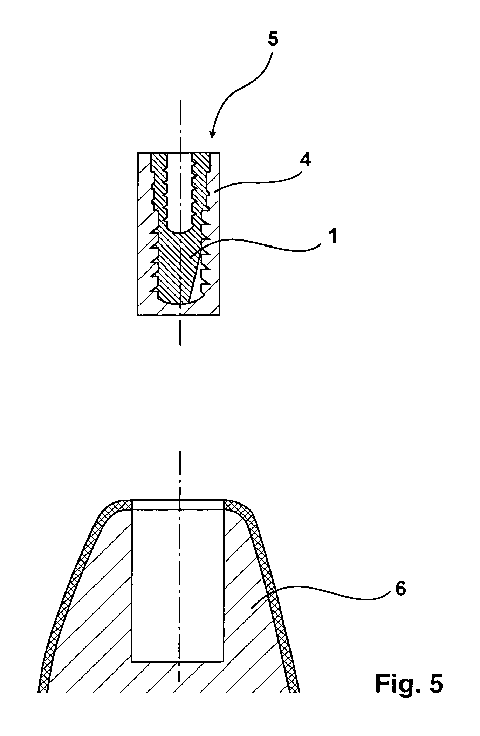

In den Figuren 1 bis 5 ist der Ablauf einer solchen Implantation eines erfindungsgemäßen Dentalimplantates beispielhaft dargestellt. Der Ablauf wird nachfolgend im Einzelnen beschrieben:

Bei Patienten mit unzureichend Knochensubstanz an der Implantatstelle im Kiefer kann das für den Zahnersatz notwendige Implantat 1 zunächst an einer geeigneten Stelle im Körper des Patienten in herkömmlicher Art und Weise implantiert werden. Dies kann beispielsweise ein Beckenknochen 2 sein. Fig. 1 zeigt ein in einem Beckenknochen 2 implantiertes handelsübliches Implantat 1.

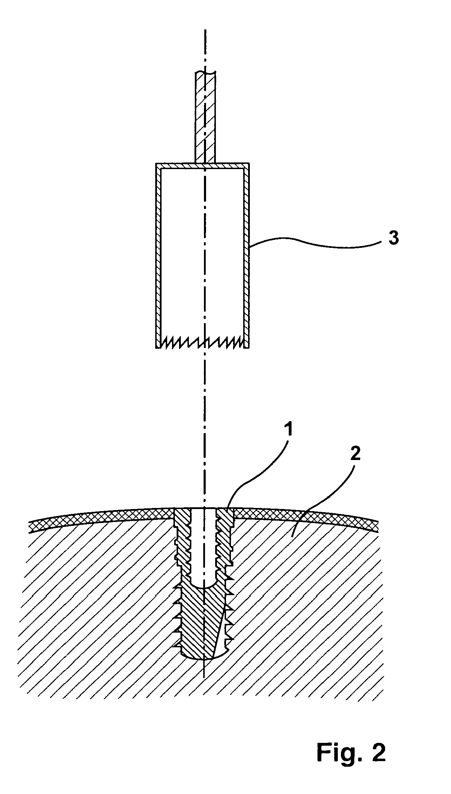

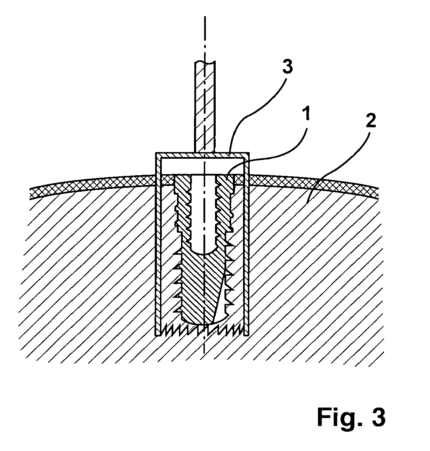

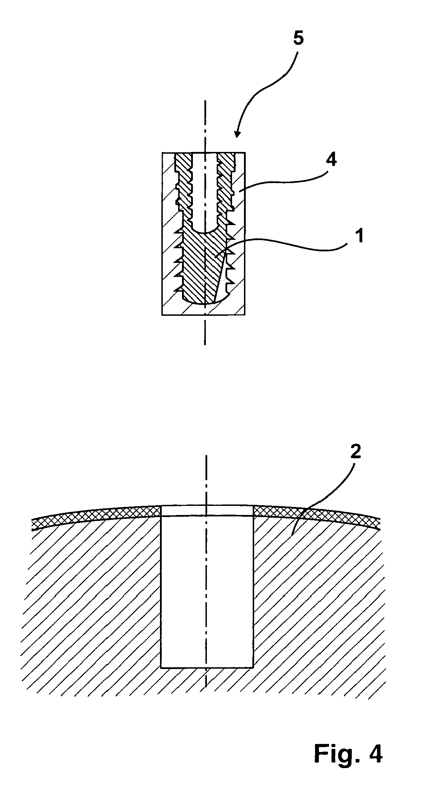

Das eigentliche Dentalimplantat 5 wird nun dadurch geschaffen, dass das Implantat 1 zusammen mit der das Implantat 1 umgebenden Knochensubstanz 4 mit einem Trepanbohrer 3 aus dem Beckenknochen 2 ausgebohrt wird, wie dies in den Fig. 2 und 3 dargestellt ist. Dabei ist der lichte Durchmesser des Trepanbohrers 3 so gewählt, dass dieser zwischen 1 mm und 8 mm, in der hier beschriebenen Ausführungsform 3 mm, größer als der größte Außendurchmesser des Implantates 1 ist. Dies wird insbesondere in Fig. 3 deutlich. Hierdurch wird das Implantat 1 zusammen mit der das Implantat 1 umgebenden Knochensubstanz 4 wieder explantiert, wie auch in Fig. 4 dargestellt ist. Dabei ist die Knochensubstanz 4 zumindest an der im Wesentlichen zylindrischen Hülle des Implantates 1 quasi hülsenförmig angeordnet und weist in dieser Ausführungsform eine Wandstärke von 1,5 mm auf.

Das derart hergestellte Dentalimplantat 5, umfassend das Implantat 1 und die Knochensubstanz 4 wird dann in eine entsprechend vorbereitete Stelle im Kieferknochen 6 des Patienten implantiert und kann dort einwachsen. Vorteilhafterweise sollte dabei die im Kieferknochen 6 vorbereitete Aussparung so groß gewählt sein, dass das Dentalimplantat (samt Knochensubstanz 4) in die Aussparung hineinpasst.

In der hier dargestellten Ausführungsform kann das Dentalimplantat 5 unmittelbar nach Implantieren des Implantates 1 in dem Beckenknochen 2 explantiert werden.

In einer anderen, hier nicht dargestellten Ausführungsform ist es auch möglich, das Implantat so lange im Beckenknochen zu belassen, bis die Knochensubstanz am Implantat angewachsen ist, bevor das Dentalimplantat mit der daran angewachsenen Knochensubstanz aus dem Beckenknochen ausgebohrt wird.

## Patentansprüche

1. Dentalimplantat zur Implantation in einen menschlichen oder tierischen Kieferknochen mit einem Implantat (1) zur Aufnahme eines Zahnersatzes,
**dadurch gekennzeichnet,**
**dass** das Implantat (1) mit Knochensubstanz (4) des Patienten zumindest teilweise umgeben ist, wobei die Knochensubstanz (4) nicht von der Stelle des Kiefers (6) des Patienten stammt, an der das Dentalimplantat (5) implantiert werden soll.

2. Dentalimplantat nach Anspruch 1,
**dadurch gekennzeichnet,**
**dass** die Knochensubstanz (4) eine Wandstärke von 0,5 mm bis 4 mm, vorzugsweise 1 mm bis 2 mm aufweist.

3. Dentalimplantat nach einem der vorangehenden Ansprüche,
**dadurch gekennzeichnet,**
**dass** die Knochensubstanz (4) am Implantat (1) angewachsen ist.

4. Dentalimplantat nach einem der Ansprüche 1 oder 2,
**dadurch gekennzeichnet,**
**dass** die Knochensubstanz (4) lose am Implantat (1) anhaftet.

5. Verfahren zur Herstellung eines Dentalimplantates gemäß einem der vorangehenden Ansprüche,
**dadurch gekennzeichnet,**
**dass** im Körper des Patienten zunächst in einen beliebigen Knochen (2) ein Implantat (1) implantiert wird und dass das Implantat (1) zusammen mit der das Implantat (1) umgebenden Knochensubstanz (4) wieder explantiert wird, bevor das Implantat (1) zusammen mit der explantierten Knochensubstanz (4) an der endgültigen Stelle im Kieferknochen (6) des Patienten erneut implantiert wird.

6. Verfahren nach Anspruch 5,
**dadurch gekennzeichnet,**
**dass** das Implantat (1) unmittelbar nach der Implantation explantiert wird.

7. Verfahren nach Anspruch 5,
**dadurch gekennzeichnet,**
**dass** das Implantat so lange im Knochen des Patienten verbleibt, bis genügend Knochensubstanz an dem Dentalimplantat angewachsen ist.
